Europäisches Patentamt

(19) European Patent Office

Office européen des brevets

(11) EP 0 613 729 B1

## (12) EUROPEAN PATENT SPECIFICATION

(45) Date of publication and mention
of the grant of the patent:
**21.05.1997 Bulletin 1997/21**

(51) Int. Cl.6: **B05D 1/40**, D21F 3/08

(21) Application number: **94850020.2**

(22) Date of filing: **10.02.1994**

(54) **Method for coating of a roll of a paper machine**

Verfahren zur Beschichtung einer Papiermaschinen-Walze

Méthode de revêtement d'un rouleau d'une machine à papier

(84) Designated Contracting States:
**AT CH DE FR GB IT LI SE**

(30) Priority: **11.02.1993 FI 930611**

(43) Date of publication of application:
**07.09.1994 Bulletin 1994/36**

(73) Proprietor: **VALMET CORPORATION**
**00620 Helsinki (FI)**

(72) Inventor: **Lehtonen, Pentti Sakari**
**F-40250 Jyväskylä (FI)**

(74) Representative: **Perklev, Karin Cecilia et al**
**AWAPATENT AB,**
**P.O. Box 5117**
**200 71 Malmö (SE)**

(56) References cited:
**EP-A- 0 568 509**          **DE-A- 3 820 050**
**US-A- 5 023 985**          **US-A- 5 176 940**

## Description

The invention concerns a method for coating of a roll of a paper machine as defined in the preamble of claim 1, which is based on the technique disclosed in US-A-5 176 940.

In the prior art, a process of coating of a roll with polyurethane by means of rotation casting is known. However, in the prior art, for the central unit of the system, a satisfactory method is not known in which the coating of a so-called shape-profiled and/or hardness-profiled roll should take place smoothly without discontinuity in the hardness or in the shape.

In the present application, a novel method is suggested, in which, before the polymer is cast, at least three desired values of surface hardness/surface profile are fed into the central unit of the system as starting-value data over the length of the roll. Said desired values of surface hardness/surface profile are preferably chosen at the ends of the roll and at the middle of the roll. On the basis of the given starting values, the central unit, which is preferably a microprocessor, forms a surface-property function $f_1(x), f_3(x)$, which represents the desired surface hardness/surface profile shape across the entire length of the roll. Thus, said function includes the given starting value points, for example three starting-value data. According to the invention, a mathematical function $f_1(x), f_3(x)$ is formed, which approximates a set of points of longitudinal position/surface hardness of the roll. Preferably, the function $f_1(x), f_3(x)$ is a polynomial function. It can be a function of second, third, or higher degree. The function $f_1(x)$ is formed in the central unit on the basis of the starting-value data. When three starting-value data are used, said set of points can be approximated by means of a parabola. The invariables of the parabola passing through the starting-value points are obtained when a group of equations is formed out of the points and this group is solved numerically, e.g., by means of Cramer's rule.

Since the surface-hardness function $f_1(x)$ that was formed cannot be used directly for controlling the casting machine, further a second function $f_2(x)$ is formed, which is a so-called mix-ratio set-value function, which determines the set value corresponding to the desired hardness at each point of length of the roll, i.e. the mix ratio with which the desired hardness is obtained.

The profile form of the roll face can be regulated by, in the casting situation, regulating the flow quantity of the polymer applied from the casting nozzle and/or by, in the casting situation, regulating the speed of rotation of the rotated roll, and/or by regulating the movement of the casting nozzle in the axial direction of the roll.

The crown of a roll can be produced in the way mentioned above by regulating the profile of the roll face. An operational crown of a roll can, however, also be produced by varying the hardness of the coating over the length of the roll so that the shape profile of the roll remains straight when the roll face is unloaded. When the roll is coated so that the hardness of the roll is at the maximum in the middle area of the roll and at the minimum in the lateral areas of the roll, in a loading situation the roll face yields more in the lateral areas of the roll and, thus, in a loaded situation, the desired crown form is obtained. The casting is carried out expressly so that the end areas of the roll are softest, whereas there is a maximum of hardness at the middle of the roll. By means of the method of the invention, it is also possible to produce operational negative crown.

By means of grooves provided on reel spools, it is possible to prevent formation of air bags between the paper web and the reel face. In the prior-art manufacturing technique, the surface coating was first ground, and the grooves were then machined mechanically. By means of the method in accordance with the invention, the face and the grooves are formed in one casting step by bringing the casting head into a certain movement in the direction of the central axis (x) of the roll and, thus, by giving the threading a certain pitch. In order that the shape of the spiral profile should remain in the desired form, the mix ratio that is being cast is given a certain recipe, by whose means rapid hardening of the coating is achieved. The hardening time is 1...3 seconds. The reaction has been accelerated by, in the use of polyurethane, increasing the proportion of diamine $Q_{p3}$ in the mix. Thus, by reducing the reaction time, the hardening is accelerated and deformation of the cast spiral is prevented. The grooves produced by means of the method operate well as air-removing ducts. It is unnecessary to impose strict requirements of shape on the groove form.

The method of the invention is characterized in that, into a central unit of a system, desired surface property values of the roll are fed as starting-value data at least at three points over the length of the roll said surface property being the surface hardness or the surface profile shape, and that, in the central unit a surface property function ($f_1(x)$ or $f_3(x)$) is formed, said function ($f_1(x)$ or $f_3(x)$) approximating said starting-value data, whereupon the roll is coated while following the function ($f_1(x)$ or $f_3(x)$) created in the central unit over the distance of the length of the roll, whereby a surface hardness or surface profile corresponding to the formed function ($f_1(x)$ or $f_3(x)$) and comprising no steps or other points of discontinuity can be formed. Particular embodiments of the invention are disclosed in the dependent claims.

In the following, the invention will be described with reference to some preferred embodiments of the invention illustrated in the figures in the accompanying drawings, the invention being, yet, not supposed to be confined to said embodiments alone.

Figure 1 illustrates the system of regulation in accordance with the invention.

Figure 2A illustrates the regulation of the surface hardness of the roll by means of the functions $f_1(x)$ and $f_2(x)$.

Figure 2B shows a construction of a casting head.

Figure 3A shows a first preferred embodiment of a coated roll in accordance with the invention.

Figure 3B shows a second preferred embodiment of a coated roll in accordance with the invention.

Figure 3C shows a third preferred embodiment of a coated roll in accordance with the invention.

Figure 3D shows and illustrates a coating in which the face is straight across the entire distance of the roll length but in which the hardness of the roll coating varies over the distance of the roll, being at the maximum in the middle area of the roll.

Figure 3E shows an embodiment of a roll in accordance with the invention, in which the roll comprises a coating by whose means an operational negative crown has been formed, i.e. in which the maximum hardness of the coating occurs at both ends of the roll and the minimum hardness in the middle area of the roll. Thus, in the unloaded state, the surface profile shape of the roll is straight.

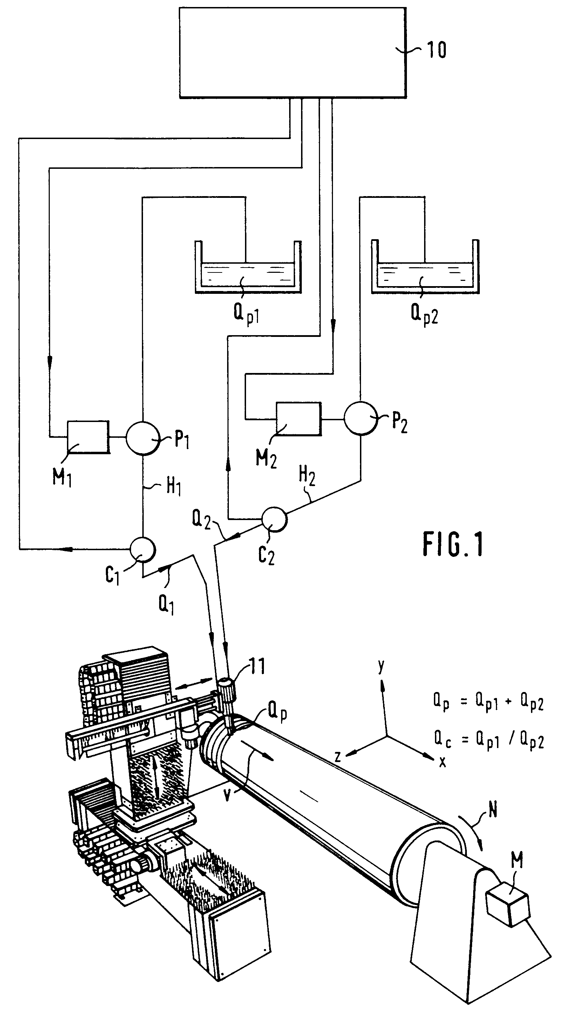

Fig. 1 illustrates a roll coating system in accordance with the invention. The coating system comprises a central unit 10, preferably a microprocessor, into which the desired properties of the roll are fed as starting-value data from at least three points along the length of the roll. Preferably, said surface property data (surface-hardness data / profile data) are given from both ends and from the middle area of the roll.

According to the invention, based on the set of points given as the starting values (position of length on the roll - value of hardness of the roll surface; position of length on the roll - profile shape of the roll), the central unit 10 forms a mathematical function that represents a property of the surface. The function is formed advantageously, e.g., by means of Cramer's numerical method. When three points are given as the starting data, preferably a polynomial function and preferably a parabola is formed, the invariables in said parabola being obtained when a group of equations is formed on the basis of the starting-value data and when this group of equations is solved (by Cramer's method). Thus, based on the given starting-value data, the central unit 10 forms a function $f_1(x)$, which represents the variation in the desired surface hardness / surface profile form across the length of the roll T. If the surface hardness is changed in the method, the function $f_1(x)$ is not sufficient alone, because the hardness value that is obtained cannot be used directly for the control of the casting machine. The control value corresponding to the desired hardness must be found out by means of the conversion function $f_2(x)$. By means of the function $f_2(x)$, the hardness is converted to a mix ratio (recipe), by whose means the desired hardness is achieved.

Herein, for the sake of example, the flow of the mix $Q_p$ coming out of the casting head 11 is denoted with Q and the flows of the components of formation $Q_{p1}$ and $Q_{p2}$ of the mix $Q_p$ with $Q_1$ and $Q_2$. Of course, it is obvious that there may be a great number of components of formation $Q_{p1}, Q_{p2}...Q_{pn}$ of the mix $Q_p$. When the surface hardness is regulated across the length of the roll, the central unit 10 gives set values for the flow Q of the mix $Q_p$ coming out of the casting head 11 and for the

pumps $P_1, P_2$ which control the flows $Q_1, Q_2$ of the components of formation $Q_{p1}$ and $Q_{p2}$ of said mix $Q_p$. The pumps are followed by flow meters $C_1, C_2$, whose measurement values are transferred back to the logic of the central unit, which compares the measured values $Q_{1M}, Q_{2M}$ with the values $Q_1, Q_2$ that had been given as starting data. If the values do not correspond to one another, the central unit gives new settings to the pumps $P_1, P_2$ as feedback.

In the process of coating of a roll, as the variables it is possible to consider the quantity $Q_p$ of flow of polymer from the casting head 11 onto the roll T face, the speed of rotation N of the roll T to be coated, the speed v of movement of the casting head 11 in the axial direction of the roll to be coated (direction X), and the mix ratio/recipe $Q_{p1}/Q_{p2}$ of the polymer, preferably polyurethane, which recipe is herein, in general, understood as meaning the proportions of percentage with which each mix component is represented in the ultimate mix $Q_p$.

In rotation casting, the casting head 11 is displaced along the roll T face in the axial direction (x) of the roll, while the roll T is rotated at the same time. As the casting head makes progress along the length of the roll, a new hardness value is updated, e.g., at intervals of 50 ms from the function $f_1(x), f_2(x)$ that has been formed in the central unit 10, and the recipe $Q_{p1}, Q_{p2}$ that carries the hardness value into effect is executed by means of new set values given to the pumps $P_1, P_2$. The regulation of the pumps $P_1, P_2$ can take place, e.g., by varying the speeds of rotation of the pumps by means of frequency converters.

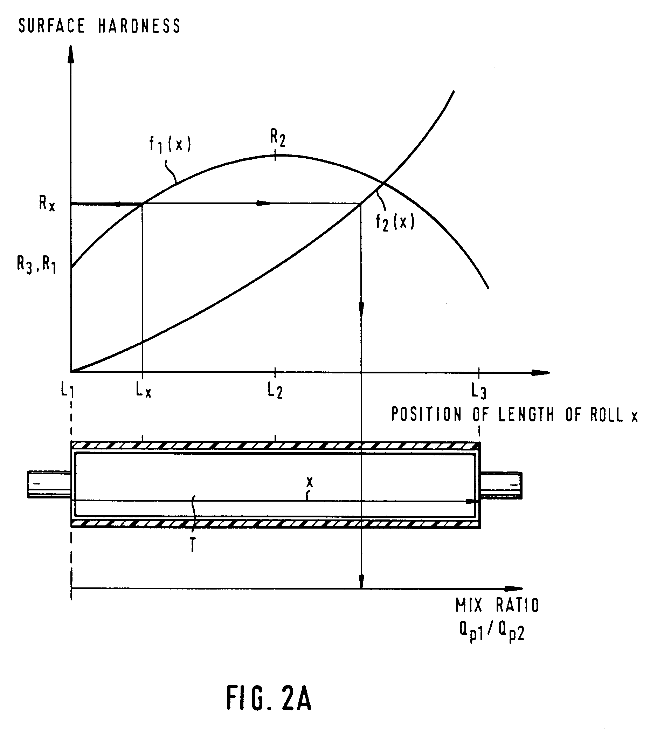

Fig. 2A illustrates the regulation of the surface hardness of the roll by using the functions $f_1(x), f_2(x)$ for the control. As is shown in the figure, the coating of the roll is started by casting from one end of the roll by rotating the roll T at the speed of rotation N and by displacing the casting head 11 in the axial direction (direction X) of the roll T. The flow quantity of the polymer $Q_p$ coming out of the casting head 11 is denoted with Q.

In the figure, the method in accordance with the invention is illustrated. To the central unit 10, the desired hardnesses in the middle area ($R_2$) of the roll and at the ends ($R_1, R_3$) of the roll have been given as starting-value data. On the basis of the set of points $L_1, R_1$; $L_2, R_2$; $L_3, R_3$, a group of equations is formed, which is solved numerically by Cramer's method, whereby, to approximate the above set of points, a function $f_1(x)$ is obtained, which passes through said starting-value points and which is a polynomial function, preferably a parabola. The function is continuous and smooth, and the hardness values of the roll T face can be read from all points along the length of the roll. No jumps occur in the hardness values. After the function $f_1(x)$ has been created by means of the central unit 10, preferably a microprocessor, in the memory of the central unit, the control system starts reading the function $f_1(x)$ from one end of the roll T. The system reads a new hardness value, e.g., at intervals of 50 ms, and in this way the hardness is varied continuously.

Fig. 2A shows the function $f_1(x)$, by whose means the desired hardness value $R(x)$ can be read, on the basis of which value the transfer takes place to the set-value function $f_2(x)$, and by means of said function $f_2(x)$ it is possible to read the mix ratio $Q_c = Q_{p1}/Q_{p2}$, with which the hardness read from the function $f_1(x)$ is carried into effect. In the figure, the method mentioned above and the reading and the direction of reading of the functions $f_1(x), f_2(x)$ are illustrated by means of arrows. Within the scope of the invention, such an embodiment is also possible in which both the surface hardness and the profile are regulated at the same time.

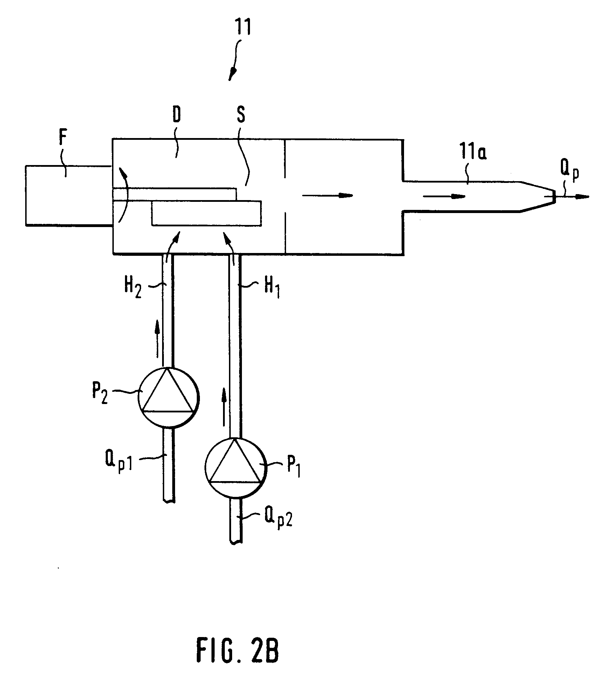

Fig. 2B shows the casting head, 11 used in the rotation casting of a roll face in accordance with the invention, for the arrangement of application of the coating material of two or more components. The ducts $H_1$ and $H_2$ pass into the casting head 11, and said ducts are further connected with pump devices $P_1, P_2$... The different components $Q_{p1}, Q_{p2}...Q_{pn}$ are passed into the ducts $H_1, H_2...H_n$. There may be several components $Q_{p1}, Q_{p2}$... The components are passed into the mixing chamber D in the casting head 11, which mixing chamber comprises a mixing device S, whose shaft revolves at a high speed. By means of the pressure produced by the pump devices $P_1$ and $P_2$ the mixed polymer mix is cast out of the nozzle head 11a and directly onto the roll face. As the coating material, it is possible to use, e.g., a two-component coating material $Q_{p1}, Q_{p2}$, which comprises a hardener component $Q_{p1}$ and a plastic raw-material mixture component $Q_{p2}$. When polyurethane is used, the polyurethane comprises an isocyanate component $Q_{p1}$ and a polyol component $Q_{p2}$.

It is preferable to obtain a short hardening time for the coating. The hardening or reaction time can be regulated, e.g., in polyurethane coating by using, e.g., a diamine component $Q_{p3}$ and by adjusting its proportion in the mix. If the proportion of the diamine component $Q_{p3}$ in the mix is increased, the reaction time of the mix is shortened, i.e. the hardening speed of the mix is increased. Normally the hardening speed is in a range of 5...9 seconds. When the method of the invention is used and when a wave-shaped surface profile form of a certain pitch is produced, it is preferable that the hardening time should be in the range of 1...3 seconds in order that the profile form obtained should harden quickly, so that it should not have time to become smooth before hardening.

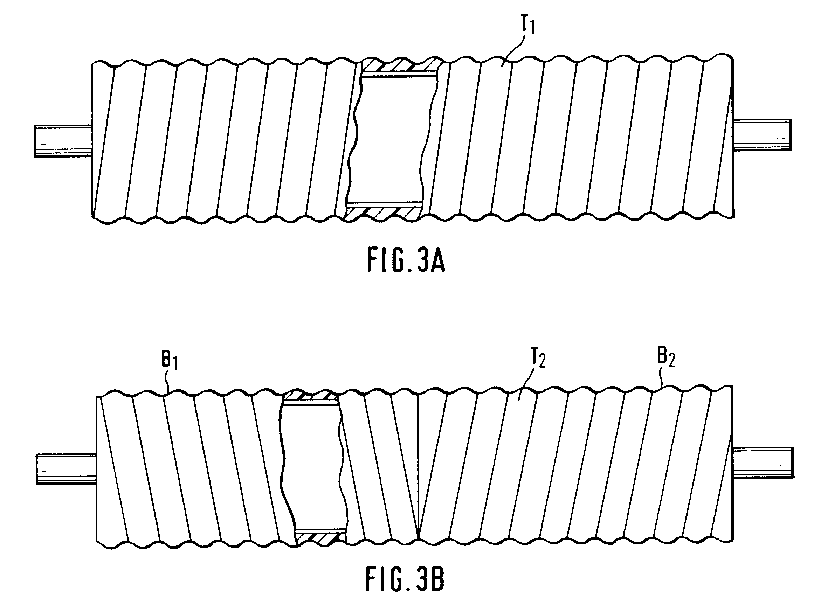

Fig. 3A shows a first preferred profile shape of the roll $T_1$ coating in accordance with the invention. The profile shape has been produced by displacing the casting head in the axial direction of the roll at a certain speed v in order that the spiral in the coating should have a certain desired pitch. The desired pitch for the spiral is achieved by shifting the casting head 11, i.e. by shifting the sledge of the casting head 11 in the axial direction of the roll during each revolution of the roll. The distance of transfer of the sledge per revolution of the roll may be a distance equal to, or smaller than, the width of the bead of mix extruded from the casting head 11. When an admixture that increases the hardening speed is added, it is possible to provide the effect that the cast bead receives a wave form and is not smoothed. The wave form of the extruded mix can also be affected by regulating the flow speed of the mix $Q_p$ flowing out of the casting head 11 and/or, in rotation casting, by regulating the speed of rotation N of the coated roll. The desired cast form is obtained in polyurethane coating by besides $Q_{p1}, Q_{p2}$ also using $Q_{p3}$, which is, for example, a diamine, by means of whose addition the reaction time is reduced so that the hardening takes place, for example, even in one second. Normally the reaction time is 5...9 seconds. The form of the spiral can be influenced by increasing or reducing the flow speed $Q_1$ from the casting head 11. Thus, the polyurethane is shaped with ridges, in which case grooves are formed between the ridges. The grooves pass in spiral shape from end to end across the roll. The coating shown in the figure is suitable, e.g., for reel spools. By means of the grooves on the reel spools, it is possible to prevent formation of air bags between the paper web and the spool face. The grooves operate as air-removing ducts, so that it is unnecessary to impose strict requirements of shape on the groove form. Thus, the prior-art grinding of the face with subsequent mechanical formation of the grooves are not needed.

In Fig. 3B, a second preferred profile shape of a roll $T_2$ coating in accordance with the invention is illustrated. The coating of the roll has been started from the middle. First, the half $B_1$ of the roll area has been prepared, and thereupon the other half $B_2$ of the roll. Thus, the spiral runs as right-handed and as left-handed from the middle area of the roll towards the roll ends. The spiral has been produced in a way similar to that described in Fig. 3A. It is only the directions of movement of the sledge and the point of starting of the coating from the middle of the roll that differ from the solution of coating shown in Fig. 3A. By means of said formation of the profile, a surface form is obtained by whose means the web is spread towards both sides.

Moreover, also in this embodiment, the grooves act as air-removing ducts, by whose means formation of air bags is prevented between the paper web and the roll.

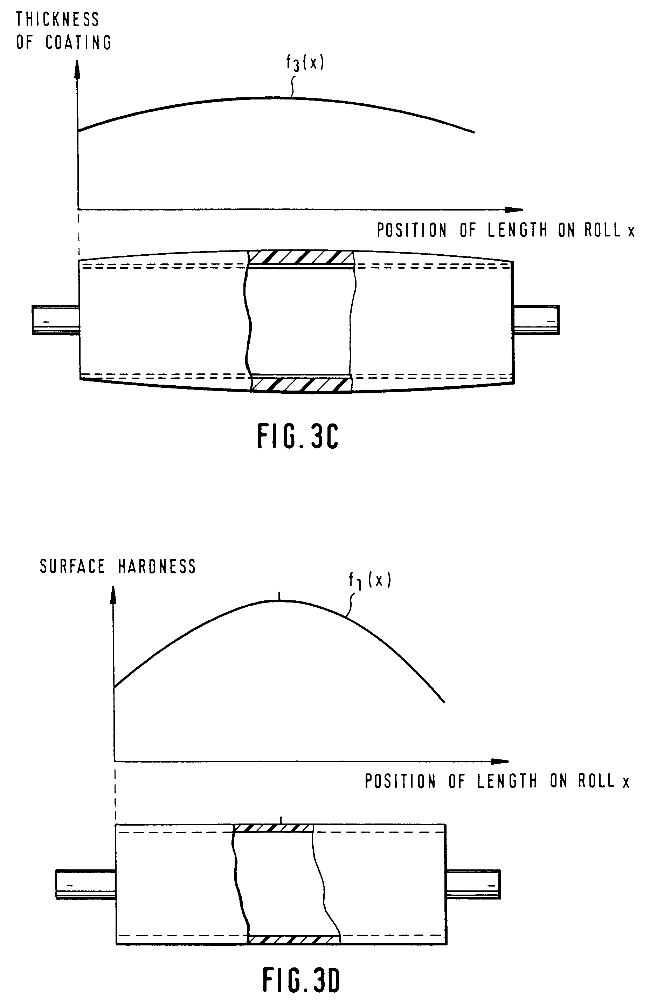

Fig. 3C illustrates a crown form of the roll face produced by means of the method of the invention, wherein the profile of the face is varied smoothly across the entire length of the roll. The profile shape has been produced by varying the quantity of flow $Q_p$ of the polymer coming out of the casting head by means of the surface profile function $f_3(x)$ formed on the basis of the starting values. The desired surface form can also be obtained by varying the speed of movement of the casting head 11 in the axial direction of the roll and/or by varying the speed of rotation of the roll.

Fig. 3D shows and illustrates a roll coating in which the roll face is straight in the unloaded state across the entire length of the roll, whereas the hardness of the roll coating varies across the length of the roll so that its maximum value is placed in the middle area of the roll and the minimum values at the ends of the roll. By means of said variation in the hardness profile, an operational crown formation is obtained. When the roll is loaded, the lateral areas of the roll yield more than the middle areas of the roll. In this way, the desired crown form is obtained expressly in the loaded state of the roll.

By means of the method of the invention, it is also possible to obtain a negative crown form, in which case such a function $f_1(x)$ is read as has the minimum hardness in the middle area of the roll and the maximum hardness in both end areas of the roll.

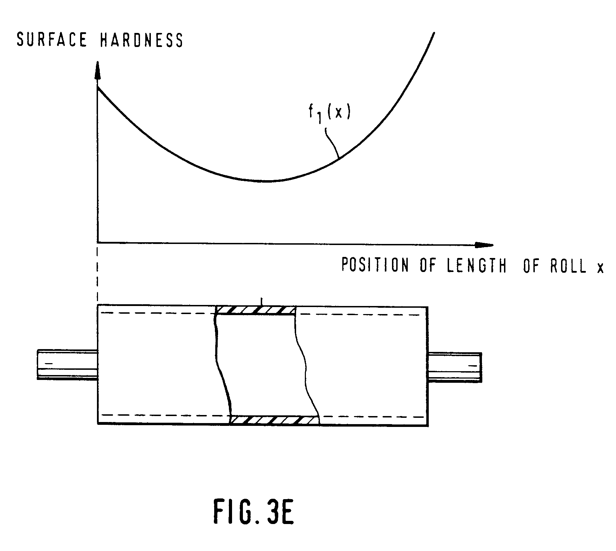

Fig. 3E shows an embodiment of the invention in which the roll. has a negative crown form. In such a case, the maximum hardness in the roll. face is placed at both ends of the roll and the minimum hardness in the middle area of the roll. The function $f_1(x)$ is formed in a way corresponding to that described with respect to positive crown form, but the starting-value data differ from those given earlier so that the starting-value data of maximum hardness are now at both ends of the roll and the starting-value data of minimum hardness in the middle area of the roll. In the unloaded state, the roll face is straight. When the face is loaded, the coating yields more in the middle area of the roll than at the ends of the roll.

## Claims

1. Method for coating of a roll (T) of a paper machine, which roll (T) is coated with a polymer, preferably polyurethane, formed of a mix ($Q_p$) of at least two components ($Q_{p1}$, $Q_{p2}$,.. $Q_{pn}$), **characterized** in that, into a central unit (10) of a system, desired surface property values of the roll are fed as starting-value data at least at three points over the length (x) of the roll (T), said surface property being the surface hardness or the surface profile shape, and that in the central unit (10), a surface property function ($f_1(x)$ or $f_3(x)$) is formed, said function ($f_1(x)$ or $f_3(x)$) approximating said starting-value data, whereupon the roll (T) is coated while following the function ($f_1(x)$ or $f_3(x)$) created in the central unit (10) over the distance of the length of the roll (T), whereby a surface hardness or surface profile corresponding to the formed function ($f_1(x)$ or $f_3(x)$) and comprising no steps or other points of discontinuity can be formed.

2. Method as claimed in claim 1, **characterized** in that, the desired surface hardness function $f_1(x)$ is formed by into the central unit (10) feeding at least three different starting-value data, preferably the surface hardnesses in the end areas of the roll (T) and the hardness of the surface in the middle area of the roll (T), whereby, based on the given combination of values, the central unit (10) creates a polynomial function ($f_1(x)$), preferably a parabola, numerically.

3. Method as claimed in claim 1, **characterized** in that, the desired surface profile function is formed by, as starting-value data, giving the desired surface profiles in the middle area of the roll (T) and at both ends of the roll (T), whereby, based on the given starting-value data, the central unit (10) forms a function ($f_3(x)$) that represents the profile form of the surface that runs through the given set of starting-value points.

4. Method as claimed in any of the preceding claims, **characterized** in that, when the surface hardness function ($f_1(x)$) is formed across the length of the roll (T), the hardness value corresponding to each point of length on the roll (T) is read from the function ($f_1(x)$), and, based on said hardness value, a desired mix ratio ($Q_{p1}/Q_{p2}$) corresponding to the proportions with which the components ($Q_{p1}$, $Q_{p2}$ ,.. $Q_{pn}$) are represented in said mix ($Q_p$) is read from a conversion function ($f_2(x)$) determining the mix ratio ($Q_{p1}/Q_{p2}$) for obtaining the desired surface hardness.

5. Method as claimed in the preceding claim, **characterized** in that, based on the mix ratio ($Q_{p1}/Q_{p2}$) that has been read, the flows ($Q_1, Q_2$) of the components ($Q_{p1}, Q_{p2}$) in the polymer are regulated to the desired level, and it is measured whether said flow ($Q_1, Q_2$) is carried into effect, whereupon a new setting is set for pumps ($P_1, P_2$) regulating the flows ($Q_1, Q_2$) of the components ($Q_{p1}, Q_{p2}$).

6. Method as claimed in the preceding claim, **characterized** in that the pumps ($P_1, P_2$) are regulated by regulating the speeds of rotation of the motors ($M_1, M_2$) that rotate the pumps ($P_1, P_2$).

7. Method as claimed in any of the preceding claims, **characterized** in that, a spiral form with a desired pitch is produced for the coating by moving the sledge of a casting head (11) in the direction of the longitudinal axis (x) of the roll (T), and a wave form is obtained by shortening the hardening time, for example, in the case of polyurethane coating, by increasing the proportion of, for example, diamine in the mix ($Q_p$).

8. Method as claimed in claim 7, **characterized** in that, as one component ($Q_{p3}$) that determines the hardening time of the mix ($Q_p$), a diamine is used, the reaction or hardening time of the mix ($Q_p$) being adjusted to the range of 1...3 seconds, which permits the wave-shaped surface form that has been obtained to be retained.

9. Method as claimed in claim 7 or 8, **characterized** by applying the spiral form from end to end on the roll (T).

**10.** Method as claimed in claim 7, 8 or 9, **characterized** by applying the spiral form from the middle area of the roll ($T_2$) to both ends, the spiral form of the coating spiral formed being right-handed on one half of the roll ($T_2$) and left-handed on the other half of the roll ($T_2$).

**11.** Method as claimed in any of the preceding claims, **characterized** in that the roll is formed to comprise a surface profile shape with crown, which shape is produced by reading a continuous function ($f_3(x)$) with no steps, which function has been created into the central unit (10) and which function represents the profile of the roll face, across the length of the roll as the coating of the roll makes progress.

**12.** Method as claimed in any of the preceding claims, **characterized** in that the roll is formed to comprise a coating whose hardness is varied smoothly from one end of the roll to the other, no steps or points of discontinuity occurring in the hardness of the face, and that the maximum value of the hardness of the roll coating is present in the middle area of the roll and the minimum values of the hardness at both ends of the roll, an operational positive crown form being obtained by means of the coating on the roll.

**13.** Method as claimed in any of claims 1-11, **characterized** in that the roll is formed to comprise a coating whose hardness is varied smoothly from one end of the roll to the other, no steps or points of discontinuity occurring in the hardness of the face, and that the minimum value of the hardness of the roll coating is present in the middle area of the roll and the maximum values of the hardness of the roll coating at both ends of the roll, an operational negative crown form being obtained by means of the coating on the roll.

**Patentansprüche**

**1.** Verfahren zur Beschichtung einer Walze (T) einer Papiermaschine, welche Walze (T) mit einem Polymer, vorzugsweise Polyurethan, beschichtet wird, das aus einer Mischung ($Q_p$) von zumindest zwei Komponenten ($Q_{p1}$, $Q_{p2}$,..., $Q_{pn}$) gebildet wird, dadurch gekennzeichnet, daß in eine Zentraleinheit (10) eines Systems als Startwertdaten angestrebte Oberflächeneigenschaftswerte der Walze an zumindest drei Stellen über die Länge (x) der Walze (T) eingegeben werden, wobei die Oberflächeneigenschaft die Oberflächenhärte oder die Oberflächenprofilform ist, und daß in der Zentraleinheit (10) eine Oberflächeneigenschaftsfunktion ($f_1(x)$ oder $f_3(x)$) gebildet wird, wobei diese Funktion ($f_1(x)$ oder $f_3(x)$) den Startwertdaten angenähert ist, woraufhin die Walze (T) unter Befolgung der in der Zentraleinheit (10) geschaffenen Funktion ($f_1(x)$ oder $f_3(x)$) über die Strecke der Länge der Walze (T) beschichtet wird, wodurch eine Oberflächenhärte oder ein Oberflächenprofil gebildet werden kann, das der gebildeten Funktion ($f_1(x)$ oder $f_3(x)$) entspricht und keine Abstufungen oder weitere Unstetigkeitsstellen aufweist.

**2.** Verfahren gemäß Patentanspruch 1, dadurch gekennzeichnet, daß die angestrebte Oberflächenhärtefunktion $f_1(x)$ dadurch gebildet wird, daß in die Zentraleinheit (10) zumindest drei verschiedene Startwertdaten eingegeben werden, vorzugsweise die Oberflächenhärten in den Endbereichen der Walze (T) und die Härte der Oberfläche in dem Mittelbereich der Walze (T), wodurch basierend auf der gegebenen Kombination von Werten die Zentraleinheit (10) numerisch eine polynome Funktion ($f_1(x)$), vorzugsweise eine Parabel, schafft.

**3.** Verfahren gemäß Patentanspruch 1, dadurch gekennzeichnet, daß die angestrebte Oberflächenprofilfunktion dadurch gebildet wird, daß als Startwertdaten die angestrebten Oberflächenprofile in dem Mittelbereich der Walze (T) und an beiden Enden der Walze (T) angegeben werden, wodurch basierend auf den gegebenen Startwertdaten die Zentraleinheit (10) eine Funktion ($f_3(x)$) bildet, die die Profilform der Oberfläche darstellt, die durch den gegebenen Satz von Startwertstellen verläuft.

**4.** Verfahren gemäß einem der vorangegangenen Patentansprüche, dadurch gekennzeichnet, daß, wenn die Oberflächenhärtefunktion ($f_1(x)$) über die Länge der Walze (T) gebildet ist, der Härtewert entsprechend jeder Stelle der Länge an der Walze (T) von der Funktion ($f_1(x)$) gelesen wird und basierend auf dem Härtewert ein angestrebtes Mischungsverhältnis ($Q_{p1}/Q_{p2}$) entsprechend den Anteilen, mit denen die Komponenten ($Q_{p1}$, $Q_{p2}$ ..., $Q_{pn}$) in der Mischung ($Q_p$) dargestellt sind, von einer Umwandlungsfunktion ($f_2(x)$) gelesen wird, die das Mischungsverhältnis ($Q_{p1}/Q_{p2}$) für das Erhalten der erwünschten Oberflächenhärte bestimmt.

**5.** Verfahren gemäß dem vorangegangenen Patentanspruch, dadurch gekennzeichnet, daß basierend auf dem gelesenen Mischungsverhältnis ($Q_{p1}/Q_{p2}$) die Ströme ($Q_1$, $Q_2$) der Komponenten ($Q_{p1}$, $Q_{p2}$) in dem Polymer zu der angestrebten Höhe reguliert werden und gemessen wird, ob der Strom ($Q_1$,$Q_2$) bewirkt worden ist, woraufhin eine neue Einstellung für die Pumpen ($P_1$, $P_2$) eingestellt wird, die die Ströme ($Q_1$, $Q_2$) der Komponenten ($Q_{p1}$, $Q_{p2}$) regulieren.

**6.** Verfahren gemäß dem vorangegangenen Patentanspruch, dadurch gekennzeichnet, daß die Pumpen ($P_1$, $P_2$) dadurch reguliert werden, daß die Drehzahlen der die Pumpen ($P_1$, $P_2$) drehenden Motoren ($M_1$, $M_2$) reguliert werden.

7. Verfahren gemäß einem der vorangegangenen Patentansprüche, dadurch gekennzeichnet, daß für die Beschichtung eine Spiralform mit einer angestrebten Ganghöhe dadurch erzeugt wird, daß der Wagen eines Formkopfes (11) in der Richtung der Längsachse (x) der Walze (T) bewegt wird, und eine Wellenform dadurch erhalten wird, daß die Härtungszeitdauer gekürzt wird, und zwar beispielsweise im Falle einer Polyurethanbeschichtung durch Erhöhen des Anteiles von beispielsweise Diamin in der Mischung ($Q_p$).

8. Verfahren gemäß Patentanspruch 7, dadurch gekennzeichnet, daß als eine Komponente ($Q_{p3}$), die die Härtungszeitdauer der Mischung ($Q_p$) bestimmt, ein Diamin verwendet wird, wobei die Reaktions- oder Härtungszeitdauer der Mischung ($Q_p$) zu dem Bereich von 1 bis 3 Sekunden eingestellt wird, wodurch die erhaltene wellenförmige Oberflächenform beibehalten werden kann.

9. Verfahren gemäß Patentanspruch 7 oder 8, gekennzeichnet durch das Auftragen der Spiralform vom Anfang bis zum Ende an der Walze (T).

10. Verfahren gemäß Patentanspruch 7, 8 oder 9, gekennzeichnet durch das Auftragen der Spiralform von dem Mittelbereich der Walze ($T_2$) zu beiden Enden hin, wobei die Spiralform der gebildeten Beschichtungsspirale an einer Hälfte der Walze ($T_2$) rechtswendig und an der anderen Hälfte der Walze ($T_2$) linkswendig ist.

11. Verfahren gemäß einem der vorangegangenen Patentansprüche, dadurch gekennzeichnet, daß die Walze ausgebildet ist, um eine Oberflächenprofilform mit Durchbiegung aufzuweisen, welche Form durch Lesen einer stetigen Funktion ($f_3(x)$) ohne Abstufungen erzeugt wird, welche Funktion in der Zentraleinheit (10) geschaffen worden ist und welche Funktion das Profil der Walzenfläche darstellt, und zwar über die Länge der Walze, wenn die Beschichtung der Walze Fortschritte macht.

12. Verfahren gemäß einem der vorangegangenen Patentansprüche, dadurch gekennzeichnet, daß die Walze ausgebildet wird, um eine Beschichtung aufzuweisen, deren Härte von einem Ende der Walze zu dem anderen glatt variiert wird, wobei keine Abstufungen oder Unstetigkeitsstellen in der Härte der Walze auftreten, und daß der Maximalwert der Härte der Walzenbeschichtung in dem Mittelbereich der Walze und die Minimalwerte der Härte an beiden Enden der Walze vorhanden sind, wobei eine betriebliche Form mit positiver Durchbiegung mit Hilfe der Beschichtung an der Walze erreicht wird.

13. Verfahren gemäß einem der Patentansprüche 1 bis 11, dadurch gekennzeichnet, daß die Walze ausgebildet wird, um eine Beschichtung aufzuweisen, deren Härte von einem Ende der Walze zum anderen glatt variiert wird, wobei keine Abstufungen oder Unstetigkeitsstellen in der Härte der Walze auftreten, und daß der Minimalwert der Härte der Walzenbeschichtung in dem Mittelbereich der Walze und die Maximalwerte der Härte der Walzenbeschichtung an beiden Enden der Walze vorhanden sind, wobei mit Hilfe der Beschichtung an der Walze eine betriebliche Form mit negativer Durchbiegung erhalten wird.

**Revendications**

1. Procédé de revêtement d'un rouleau (T) de machine à papier, lequel rouleau (T) est revêtu avec un polymère, de préférence du polyuréthane, constitué par un mélange ($Q_p$) d'au moins deux constituants ($Q_{p1}, Q_{p2}, ... Q_{pn}$), caractérisé en ce que, dans une unité centrale (10) d'un système, des valeurs voulues d'une propriété de surface du rouleau sont entrées comme données de valeurs initiales en au moins trois points sur la longueur (x) du rouleau (T), ladite propriété de surface étant la dureté superficielle ou le profil de surface, et en ce que dans l'unité centrale (10) est formée une fonction ($f_1(x)$ ou $f_3(x)$) de propriété de surface, ladite fonction ($f_1(x)$ ou $f_3(x)$) fournissant une approximation desdites données de valeurs initiales, après quoi le rouleau (T) est revêtu tout en suivant la fonction ($f_1(x)$ ou $f_3(x)$) créée dans l'unité centrale (10) sur la distance de la longueur du rouleau (T), grâce à quoi il est possible de réaliser une dureté superficielle ou un profil de surface correspondant à la fonction ($f_1(x)$ ou $f_3(x)$) formée et ne comportant ni gradins ni autres points de discontinuité.

2. Procédé selon la revendication 1, caractérisé en ce que la fonction $f_1(x)$ de dureté superficielle voulue est formée en entrant dans l'unité centrale (10) au moins trois données différentes de valeurs initiales, de préférence la dureté superficielle dans les zones des extrémités du rouleau (T) et la dureté de la surface de la zone médiane du rouleau (T), grâce à quoi, sur la base de la combinaison donnée de valeurs, l'unité centrale (10) crée numériquement une fonction polynomiale ($f_1(x)$), de préférence une parabole.

3. Procédé selon la revendication 1, caractérisé en ce que la fonction de profil de surface voulu est formée en donnant, comme données de valeurs initiales, les profils de surface voulus dans la zone médiane du rouleau (T) et aux deux extrémités du rouleau (T), grâce à quoi, sur la base desdites données de valeurs initiales, l'unité centrale (10) forme une fonction ($f_3(x)$) qui représente la forme de profil de la surface qui passe par l'ensemble donné de points de valeurs initiales.

4. Procédé selon l'une quelconque des revendications précédentes, caractérisé en ce que, lorsque la fonction ($f_1(x)$) de dureté de surface est formée sur toute la longueur du rouleau (T), la valeur de dureté correspondant à chaque point sur la longueur du rouleau (T) est extraite de la fonction ($f_1(x)$) et, sur la base de ladite valeur de dureté, un rapport de mélange voulu ($Q_{p1}/Q_{p2}$), correspondant aux proportions selon lesquelles les constituants ($Q_{p1}, Q_{p2}, ... Q_{pn}$) sont représentés dans ledit mélange ($Q_p$), est extrait d'une fonction de conversion ($f_2(x)$) déterminant le rapport de mélange ($Q_{p1}/Q_{p2}$) pour obtenir la dureté superficielle voulue.

5. Procédé selon la revendication précédente, caractérisé en ce que, sur la base du rapport de mélange voulu ($Q_{p1}/Q_{p2}$) qui a été extrait, les flux ($Q_1, Q_2$) des constituants ($Q_{p1}, Q_{p2}$) dans le polymère sont régulés au niveau voulu, et une mesure est faite pour déterminer si ledit flux ($Q_1, Q_2$) est réalisé, après quoi un nouveau réglage est effectué pour des pompes ($P_1, P_2$) régulant les flux ($Q_1, Q_2$) des constituants ($Q_{p1}, Q_{p2}$).

6. Procédé selon la revendication précédente, caractérisé en ce que les pompes ($P_1, P_2$) sont réglées en réglant la vitesse de rotation des moteurs ($M_1, M_2$) qui font tourner les pompes ($P_1, P_2$).

7. Procédé selon l'une quelconque des revendications précédentes, caractérisé en ce qu'une forme en spirale à pas voulu est produite pour le revêtement en déplaçant la masse d'une masselotte de coulée (11) dans la direction de l'axe longitudinal (x) du rouleau (T), et une forme d'onde est obtenue en raccourcissant le temps de durcissement, par exemple, dans le cas d'un revêtement de polyuréthane, par une augmentation, par exemple, de la quantité de diamine dans le mélange ($Q_p$).

8. Procédé selon la revendication 7, caractérisé en ce que, comme constituant ($Q_{p3}$) qui détermine le temps de durcissement du mélange ($Q_p$), on utilise de la diamine, le temps de réaction ou de durcissement du mélange ($Q_p$) étant réglé entre 1 et 3 secondes, ce qui permet de conserver la forme de surface ondulée qui a été obtenue.

9. Procédé selon la revendication 7 ou 8, caractérisé par la réalisation de la forme en spirale d'une extrémité à l'autre du rouleau (T).

10. Procédé selon la revendication 7, 8 ou 9, caractérisé par la réalisation de la forme en spirale depuis la zone médiane du rouleau ($T_2$) jusqu'aux deux extrémités, la forme en spirale du revêtement formé en spirale étant à pas à droite sur une première moitié du rouleau ($T_2$) et à pas à gauche sur l'autre moitié du rouleau ($T_2$).

11. Procédé selon l'une quelconque des revendications précédentes, caractérisé en ce que le rouleau est formé pour comporter une surface à profil bombé, laquelle forme est produite en suivant une fonction continue ($f_3(X)$) sans gradin, laquelle fonction a été créée dans l'unité centrale (10) et laquelle fonction représente le profil de la face du rouleau, sur toute la longueur du rouleau au fur et à mesure que le revêtement du rouleau avance.

12. Procédé selon l'une quelconque des revendications précédentes, caractérisé en ce que le rouleau est formé pour comporter un revêtement dont la dureté varie progressivement d'une extrémité du rouleau à l'autre, aucun gradin ni aucun point de discontinuité n'existant dans la dureté de la face, et en ce que la valeur maximale de la dureté du revêtement du rouleau se trouve dans la zone médiane du rouleau et les valeurs minimales de la dureté aux deux extrémités du rouleau, une forme bombée convexe étant obtenue en fonctionnement à l'aide du revêtement sur le rouleau.

13. Procédé selon l'une quelconque des revendications 1 à 11, caractérisé en ce que le rouleau est formé pour comporter un revêtement dont la dureté varie progressivement d'une extrémité du rouleau à l'autre, aucun gradin ni aucun point de discontinuité n'existant dans la dureté de la face, et en ce que la valeur minimale de la dureté du revêtement du rouleau se trouve dans la zone médiane du rouleau et les valeurs maximales de la dureté du revêtement du rouleau aux deux extrémités du rouleau, une forme bombée concave étant obtenue en fonctionnement à l'aide du revêtement sur le rouleau.

FIG.1

$$Q_p = Q_{p1} + Q_{p2}$$

$$Q_c = Q_{p1} / Q_{p2}$$

SURFACE HARDNESS

$f_1(x)$

$R_2$

$R_x$

$R_3, R_1$

$f_2(x)$

$L_1$   $L_x$   $L_2$   $L_3$

POSITION OF LENGTH OF ROLL x

x

T

MIX RATIO
$Q_{p1}/Q_{p2}$

FIG. 2A

FIG. 2B

FIG.3A

FIG.3B

EP 0 613 729 B1

THICKNESS
OF COATING

$f_3(x)$

POSITION OF LENGTH ON ROLL x

FIG. 3C

SURFACE HARDNESS

$f_1(x)$

POSITION OF LENGTH ON ROLL x

FIG. 3D

SURFACE HARDNESS

$f_1(x)$

POSITION OF LENGTH OF ROLL x

FIG. 3E